# EUROPÄISCHE PATENTSCHRIFT

(11) **EP 2 624 036 B1**
(45) Veröffentlichungstag und Bekanntmachung des Hinweises auf die Patenterteilung: **06.09.2017**
(21) Anmeldenummer: 13152805.1
(22) Anmeldetag: 28.01.2013
(51) Int. Cl.: G02B 6/44

(54) **Verlegeschale für Kabelverbundstränge, insbesondere Lichtwellenleitkabelverbundstränge**
Installation tray for cable composite strands, in particular fibre optic composite strands
Enveloppe de pose pour brins de câbles liés, en particulier brins de câbles liés de fibres optiques

(30) Priorität: 02.02.2012 DE 202012001036 U; 10.08.2012 DE 102012107355
(43) Veröffentlichungstag der Anmeldung: 07.08.2013
(73) Patentinhaber: Stark, Elena, 85247 Schwabhausen (DE)
(72) Erfinder: Stark, Elena, 85247 Schwabhausen (DE)
(74) Vertreter: Wittmann, Ernst-Ulrich

(56) Entgegenhaltungen:
- EP-A1- 2 354 825
- DE-U1-202004 002 350
- US-A- 3 875 325
- US-B1- 6 533 472

## Beschreibung

Die Erfindung betrifft eine Verlegeschale für Kabelverbundstränge, insbesondere für Lichtwellenleitkabelverbundstränge und ein Verfahren zur Montage dieser Verlegeschale mit den entsprechenden Kabeln oder Rohren.

Im Stand der Technik sind Verlegeschalen für den Einsatz beim Verlegen von Kabeln und Rohren bekannt. Nachteilig ist hierbei jedoch, dass diese bei der Montage keine ausreichende Stabilität insbesondere in Bezug auf Verwindung und mechanische Belastbarkeit aufweisen, aufwendig in der Montage sind und ferner keine definierte Platzierung in Bezug auf das aufzunehmende Kabel oder Rohr aufweisen. Die Patentschrift US 6 533 472 B1 offenbart eine Verlegeschale für Kabelverbundstränge gemäß dem Stand der Technik.

Aufgabe der vorliegenden Erfindung ist es, die im Stand der Technik bekannten Probleme wenigstens teilweise zu überwinden. Gelöst wird die Aufgabe durch die Verlegeschale für Kabelverbundstränge nach Anspruch 1 und durch das Verfahren zur Montage einer entsprechenden Verlegeschale. Bevorzugte Ausführungsformen der vorliegenden Erfindung sind jeweils Gegenstand der entsprechenden Unteransprüche.

Die erfindungsgemäße Verlegeschale für Kabelverbundstränge, insbesondere für Lichtwellenleitkabelverbundstränge weist zwei Halbschalenbauteile, insbesondere ein oberes und ein unteres Halbschalenbauteil auf, welche zusammen eine Baueinheit bilden. Wenigstens ein Halbschalenbereich weist ferner endseitig eine Einfassung für das Kabel oder Rohr auf, über welche das Rohr oder Kabel in das Halbschalenbauteil der Verlegeschale eingeführt wird. Dabei ist die Einfassung auch in Form einer Halbschale oder einer Halbform ausgebildet und umschließt vorzugsweise das Kabel oder das Rohr nur teilweise. Vorzugsweise bilden bei dem Zusammenfügen der beiden Halbschalen die einander gegenüberliegenden Formabschnitte eine im wesentlichen umfassende Einfassung d.h. Einführöffnung für das Kabel oder Rohr in das Innere der Verlegeschale. Gemäß der vorliegenden Erfindung weist wenigstens ein Halbschalenbauteil der Verlegeschale Rippen auf, die insbesondere dazu dienen die Steifigkeit und damit auch die mechanische Festigkeit der Verlegeschale und der Halbschale zu erhöhen. Die Rippen sind gemäß der vorliegenden Erfindung vorzugsweise quer zur Haupterstreckungsrichtung der Verlegeschale ausgerichtet, wobei es auch im Sinn der vorliegenden Erfindung ist, Rippen vorzusehen, welche wenigstens teilweise entlang der Haupterstreckungsrichtung angeordnet sind.

Gemäß einer weiteren, besonders bevorzugten Ausführungsform der vorliegenden Erfindung sind ferner eine Vielzahl von Rippen, insbesondere 12 Rippen, vorzugsweise entlang des Mittelbereichs der Verlegeschale angeordnet.

Die Erfindung weist ferner in wenigstens einem Halbschalenbauteil, vorzugsweise in einem der Schwerkraftrichtung unten angeordneten Halbschalenbauteil Öffnungen wie zum Beispiel Bohrungen auf, über welche eventuell in der Verlegeschale nach dem Verbinden der beiden Halbschalenbauteile verbliebene Feuchtigkeit nach außen abgeführt werden kann.

Durch die Anordnung der beiden Halbschalenbauteile der Verlegeschale wird ein Innenraum in der Verlegeschale gebildet, welcher eine Abdeckung und damit auch einen Schutz gegen Verschmutzung und/oder mechanische Belastung bereitgestellt wird.

Um eine ausreichende Verbindung der beiden Halbschalenbauteile zu erreichen, weisen diese gemäß einer weiteren, besonders bevorzugten Ausführungsform Vertiefungen auf, welche vorzugsweise über die Länge der Verlegeschale verteilt sind und als Halterungs- und/oder Befestigungshilfen für Verschlussbinder wie zum Beispiel Kabelbinder dienen. Solche Binder sind in unterschiedlichen Ausführungen im Stand der Technik bekannt, wobei diese bevorzugt witterungsbeständig ausgeführt sein sollten. Die Verteilung der Binder kann gleichmäßig oder insbesondere im Bereich der mechanisch beanspruchten Bauteilsabschnitte erfolgen. Gemäß der vorliegenden Erfindung weist ein Halbschalenbauteil der Verlegeschale eine Zugentlastung für das Kabel oder Rohr im Bereich der Einfassung auf.

Solche Zugentlastungen sind grundsätzlich im Stand der Technik bekannt, jedoch ergibt sich aufgrund der Funktion und Bauweise der erfindungsgemäßen Verlegeschale und der Anordnung von Kabelverbundsträngen, insbesondere für Lichtwellenleitkabelverbundstränge die Forderung, dass diese mit wenigstens einem Halbschalenbauteil der Verlegeschale kraftschlüssig verbunden sind und gleichzeitig eine Beschädigung des Kabels oder Rohrs ausgeschlossen wird.

Hierzu wird gemäß der vorliegenden Erfindung eine Zugentlastung verwendet, die sich einerseits an die Außenkontur des Kabels oder Rohrs anpasst und Raum für eine kraft- bzw. stoffschlüssige Verbindung mit dem Halbschalenbauteil bereit stellt. Hierzu wird ein elastisches und kompressibles Band verwendet, welches stoffschlüssig mit der Außenwand des Kabels oder Rohrs verbunden wird. Im Anschluss hieran wird eine kompressionsstabile Halbschalenkombination, welche auch als Sicherungsbogen bezeichnet wird, angeordnet. Anschließend wird die Kombination aus Kabel / Rohr, kompressiblem Band und Sicherungsbogen in den Einfassungsbereich eines Halbschalenbauteiles eingelegt und mittels einer Rohrschelle als Paket verbunden. Hierdurch ergibt sich eine mechanisch stabile Verbindung zwischen Kabel - Rohr und Halbschalenbauteil, so dass ein Verschieben des Kabels oder Rohrs in dem Halbschalenbauteil bzw. der Verlegeschale verhindert wird.

Für die Zugentlastung werden ferner Bauteile aus einer Gruppe ausgewählt, welche Kabelbinder, Gummistreifen, insbesondere selbstklebende Gummistreifen, Sicherungsbogen, Rohrschellen, Rohrhalbschalen, Verbindungsmittel, Kleber, Klebeband, Dichtmasse, Kombinationen hiervon und dergleichen umfasst.

Die Erfindung weist darüberhinaus, entsprechend einer weiteren besonders bevorzugten Ausführungsform, eine Ausformung der beiden Halbschalenbauteile auf, bei welcher ein Halbschalenbauteil endseitig eine Aufweitung aufweist, welche so gestaltet ist, dass diese die Zugentlastung wenigstens teilweise aufnimmt bzw. abdeckt. Solch eine Aufweitung kann unterschiedlich ausgeführt sein, jedoch sollte sie von oben betrachtet die wesentlichen Bauteile der Zugentlastung, insbesondere auch die Rohrschelle abdecken.

Die Aufgabe der vorliegenden Erfindung wird auch durch ein Verfahren zur Montage der vorbezeichneten Verlegeschale gelöst, welches die Schritte Anbringen eines elastischen, selbstklebenden Gummistreifes am Außenmantel eines Kabels oder Rohrs, Anordnen wenigstens eines Sicherungsbogens im Bereich des Gummistreifens, Einlegen des Kabels oder Rohrs in ein Halbschalenbauteil der Verlegeschale und Fixierung des Rohrs mit der Einfassung des Halbschalenbauteils umfasst.

Das Verfahren umfasst gemäß einer weiteren, besonders bevorzugten Ausführungsform den Schritt, dass die Schritte Anbringen eines elastischen, selbstklebenden Gummistreifes am Außenmantel eines Kabels oder Rohrs, Anordnen wenigstens eines Sicherungsbogens im Bereich des Gummistreifens, Einlegen des Kabels oder Rohrs in ein Halbschalenbauteil der Verlegeschale und Fixierung des Rohrs mit der Einfassung des Halbschalenbauteils an beiden Enden bzw. Endbereichen der Halbschalenbauteile ausgeführt wird.

Ferner umfasst das erfindungsgemäße Verfahren gemäß einer weiteren besonders bevorzugten Ausführungsform den Schritt, dass nach der Fixierung des Rohrs oder Kabels das erste Halbschalenbauteil mit einem zweiten Halbschalenbauteil verschlossen wird und welches vorzugsweise endseitig eine Aufweitung aufweist, welche wenigstens teilweise die Zugentlastung bzw. deren Bauteile aufnimmt.

Mit einem weiteren Schritt, kann das so entstandene Paket durch das Anbringen von Verbindungselementen wie zum Beispiel Kabelbindern fixiert werden, welche vorzugsweise in entsprechenden Bereichen der Halbschalenbauteile angeordnet werden. Diese können sowohl im Mittelbereich, als auch in den Endbereichen und insbesondere im Bereich der Einfassungen angeordnet sein.

Die Erfindung umfasst auch die Verwendung einer Verlegeschale wie zuvor beschrieben zur Aufnahme von Rohren, insbesondere Erdrohren, Rohrverbunden, Glasfaserrohrverbunden, Kabel, Kabelverbundstränge, insbesondere für Lichtwellenleitkabelverbundstränge, Kombinationen hiervon und dergleichen.

Die Verlegeschale ist unter anderem ein Hilfsmittel zur Gewährleistung für die zu verlegenden Kabelverbundstränge, insbesondere Lichtwellenleitkabelverbundstränge, gemäß den gemeindlichen Verbauvorschriften, wie der Stadtwerke München. Diese besagen, dass die Verlegungen beziehungsweise die Anschlüsse von Kabelverbundsträngen nur in Geraden, nicht im Radius, verlegt werden dürfen. Durch die Abmessung der Verlegeschale ist dies gewährleistet.

Ebenfalls durch die geometrische Form und Längenvorgabe kann die Qualität beim Anschluss beziehungsweise beim Verbinden der beiden Kabelstränge gemäß der Stadtwerke München erfolgen. Ein weiterer Punkt ist der Schutz von empfindlichen Anschlusspunkten sowohl beim Verlegen, als auch bei einer eventuell erneuten Öffnung der Grabungsstelle. Eventuell freiliegende Muffen und Connectoren können nicht mehr durch Grabungsaktivitäten beschädigt werden.

Nachfolgend wird die Erfindung anhand der nachfolgenden detaillierten Beschreibung einer möglichen Ausführungsform der Erfindung in Verbindung mit den Zeichnungen, sowie den Ansprüchen beschrieben. Es wird darauf hingewiesen, dass durch dieses Beispiel Abwandlungen beziehungsweise Ergänzungen wie sie sich für den Fachmann unmittelbar ergeben mit umfasst sind. Darüber hinaus stellt das bevorzugte Ausführungsbeispiel keine Beschränkung der Erfindung dar, so dass auch Abwandlungen und Ergänzungen im Umfang der der Ansprüche der vorliegenden Erfindung liegen.

Dabei zeigen:

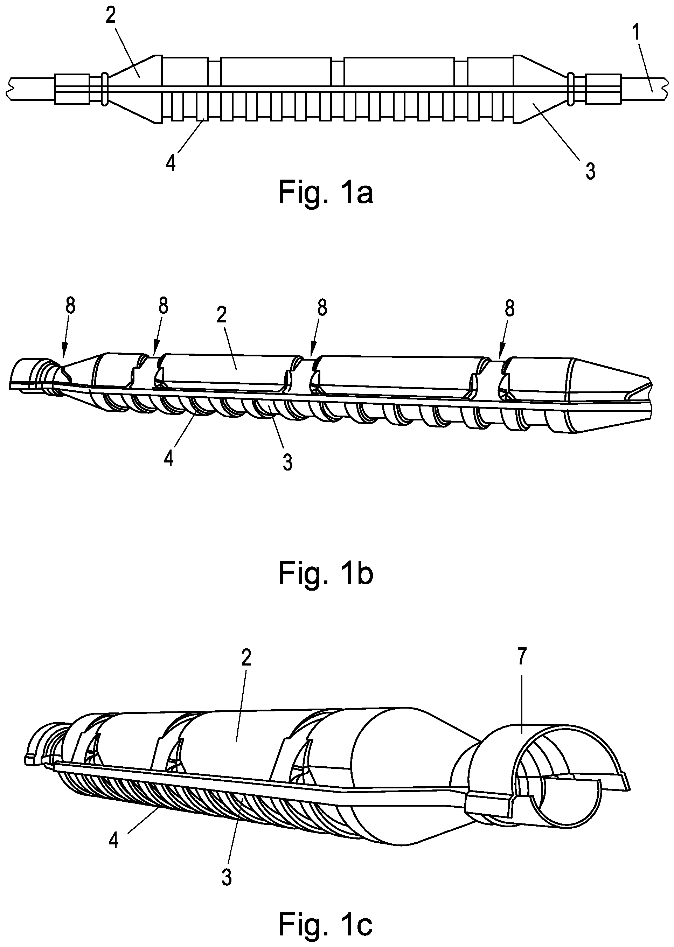

Figur 1a bis 1c verschiedene Ansichten der erfindungsgemäßen Verlegeschale ohne Kabel oder Rohr;
Figur 2 die Aufsicht auf eine erfindungsgemäßen Verlegeschale mit zwei Kabelabschnitten;
Figuren 3a und 3b Anordnung der Kabelabschnitte vor dem Abmanteln und Anbringung der entsprechenden Markierung in Bezug auf die untere Verlegehalbschale;
Figur 4 Anordnung der Kabel nach dem Abmanteln in Bezug auf die untere Verlegehalbschale;
Figuren 5a, 5b, 6a und 6b Anordnung und Zusammenführen der Rohrverbunde und Anordnung in Bezug auf die untere Verlegehalbschale;
Figur 7 Detailansicht der Verbindungsmuffe eines Rohrs;
Figuren 8 und 8' Abbildung der gemäß DIN Farbcode verbundenen 24er Rohre;
Figur 9 Ansicht der verschlossenen Verlegeschale mit dem Rohrverbund;
Figuren 10 bis 12 Detailansichten der Montage und Anordnung der Rohrverbunde und der Verlegeschalen.

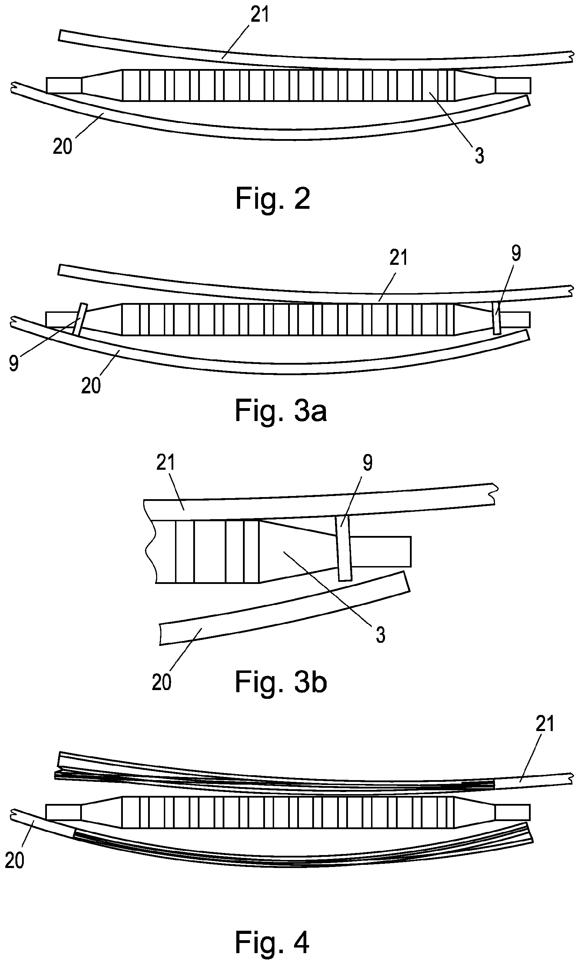

Der Gebrauch und die Nutzung der erfindungsgemäßen Verlegeschale sind wie folgt:
Die Verlegeschale wird geöffnet und der untere Bereich 3 der Schale an der Stelle positioniert, an welcher der Anschluss oder die Verbindung durchgeführt werden soll. Beide Kabelenden 20, 21 werden parallel zur Verlegeschale abgelegt (Fig. 2).

Sowohl links als auch rechts der Verlegeschale wird der Bereich der Abmantelung entsprechend der Linie 9 markiert (Fig. 3).

Die gekennzeichneten Bereiche werden links und rechts abgemantelt (Fig. 4).

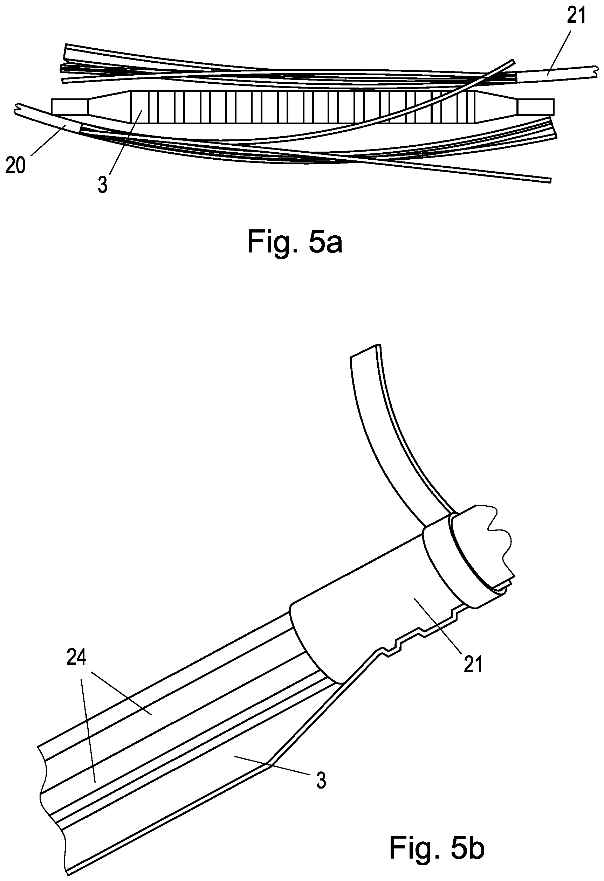

Die abgemantelten Teilstücke werden in die Verlegeschale eingelegt und mit einem Kabelbinder fixiert (Fig. 5).

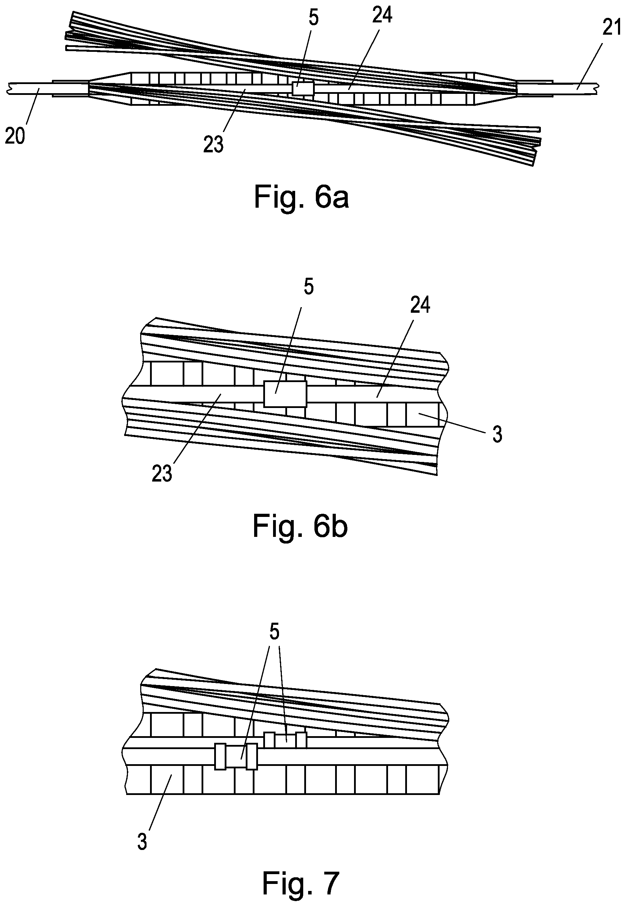

Das Zentrierrohr wird von links und rechts auf die mittlere Rippe gelegt und so gekürzt, dass diese mit einer Muffe 5 oder einem Connector verbunden werden kann (Fig. 6). Um eine optimale Qualität zu gewährleisten, sollten die Muffen 5 und Connectoren nach dem Verbinden zweier Rohre 23, 24 immer auf der Höhe der entsprechenden Rippen angeordnet sein (Fig. 7).

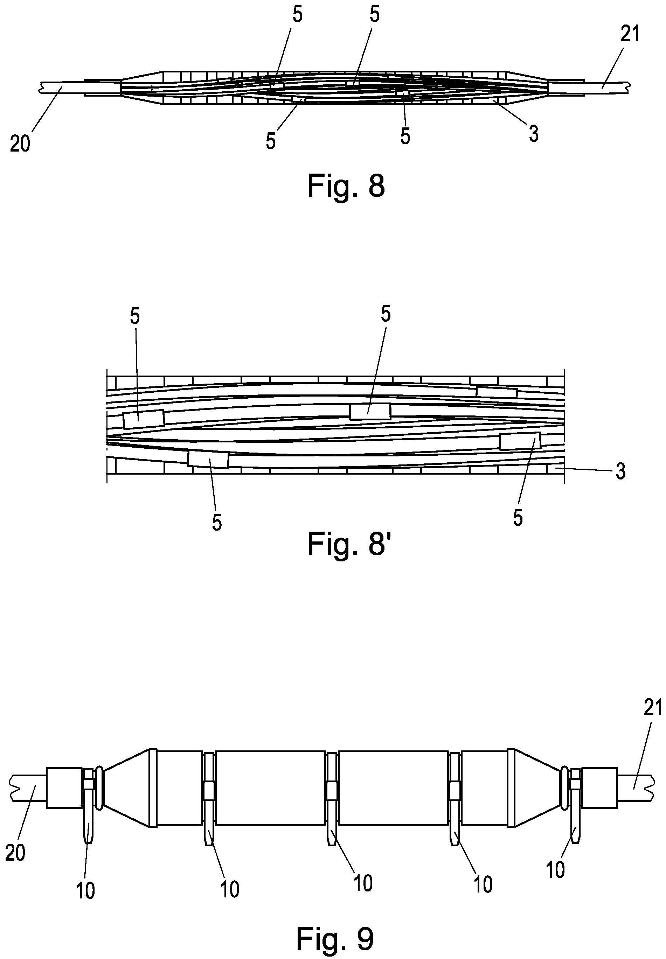

Anschließend wird mit dem Verbinden der einzelnen Rohre nach DIN Farbcode weiter fortgefahren. In diesem Beispiel werden alle Farbcodes mit weißen Streifen von der Mitte nach rechts und wieder zurück zur Mitte verlegt. Die Vollfarben werden von der Mitte nach links und wieder zurück zur Mitte verlegt. Bei entsprechend geringerer Anzahl von Rohren ergibt sich die Vorgehensweise von selbst (Fig. 8 [Abbild des gemäß DIN Farbcode verbundenen 24er Rohrverbundes]).

Das Oberteil 2 der Verlegeschale wird nun auf die Unterseite 3 aufgesetzt und gemäß den Halterungsmulden mit den Kabelbindern 10 fixiert (Fig. 9).

Die gesamte Verlegeschale ist witterungs- und UV-beständig, sowie öl-, benzol- und säurebeständig. Das Produkt ist problemlos erdverlegbar.

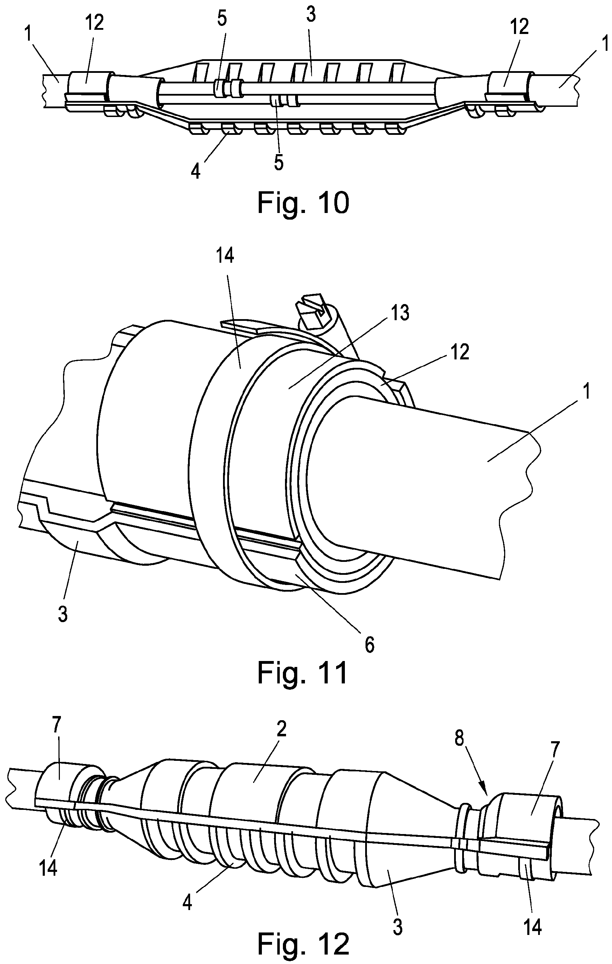

Die Figuren 10 bis 12 zeigen Details der Anordnung und Montage der Zugentlastung entsprechend einer besonders bevorzugten Ausführungsform der vorliegenden Erfindung. Dabei ist mit dem Bezugszeichen 1 der Rohrverbund dargestellt, der beidseitig in die untere Verlegehalbschale 3 eingeführt wird. Die Verlegehalbschale 3 weist Rippen 4 auf und im Einführungsbereich der Verlegehalbschale 3 sind an beiden Rohrverbunden Gummibänder 12 angeordnet.

Figur 11 zeigt die Anordnung der Zugentlastung im Detail, bei welcher neben dem Rohrverbund 1, das Gummiband 12 und die beiden Sicherungsbogen 13 zu erkennen sind. Der entsprechende Verband wird über die Rohrschelle 14 mit der Einfassung 6 der Verlegehalbschale 3 verbunden und fixiert.

Figur 12 zeigt die Verlegehalbschale mit eingebrachtem Rohrverbund und aufgesetzter oberen Verlegehalbschale 2, bei welcher auch die Aufweitungen 7 zu erkennen sind.

Nachfolgend wird die Erfindung anhand von einer Montageanleitung für die Verlegeschale erörtert.
- Montage einer ersten Verlegeschale Rohrverbund 3 auf Rohrverbund 3

Die Rohrschellen sind vor der Konnektierung der beiden Rohrverbunde (RV) auf die offenen Enden der beiden RV 1 zu schieben. Nach Einlegen der beiden Rohrverbände werden die Positionen zum Abmanteln der Rohrverbunde festgelegt. Optimal ist eine Abmantelung im Bereich der Verjüngung (Einfassungen 6) der Verlegeschalen 2, 3. Beim Abmanteln ist darauf zu achten, dass beide Seiten den gleichen Abstand haben. Nach dem Abmanteln der beiden Rohrverbunde 1 wird auf beide Enden der Rohrverbunde 1 jeweils einer der selbstklebenden Gummistreifen 12 (z.B. 300 x 60 x 3mm) aufgeklebt. Der Gummistreifen 12 ist wie in der Abbildung 10 dargestellt (zwischen den beiden Pfeilen) gezeigt anzubringen. Nach dem die beiden Gummistreifen 12 aufgeklebt sind, werden auf diesen Gummistreifen 12 zusätzlich zwei Sicherungsbogen 13 (diese schützen den Rohrverbund 1 gegen Druck beim Anziehen, des noch später beschriebenen Anbringens der Rohrschelle14 ) aufgelegt. Im nächsten Schritt ist die zu Anfang auf die beiden nicht konnektierten Rohrbunde aufgeschobene Rohrschelle 14 auf die beiden Enden der Verlegeschale 2, 3 zu schieben, so dass diese die Sicherungsbögen beim Zuschrauben auf den Rohrverbund 1 drückt. Es reicht, wenn die Schelle 14 soweit angezogen ist, dass sich der Rohrverbund 1 nicht mehr seitlich drehen lässt. Nach dem die beiden Rohrschellen 14 auf dem Rohrverbund 1 angebracht wurden, wird die obere Schale 2 auf die untere Schale 3 aufgelegt. Im vorletzten Montageschritt werden die im Lieferumfang enthaltenen Kabelbinder zum Sichern der oberen Schale 2 mit der unteren Schale 3 angebracht. Die Kabelbinder sind wie in den Abbildungen 12-RV3 und 13-RV3 auf den beiden Halbschalen anzubringen. Im letzten Montageschritt werden die Kabelbinder direkt oberhalb des Verschlusses mit einem Seitenschneider gerade abgeschnitten.

### Bezugszeichen

- 1: Lichtwellenleitkabelverbundstränge
- 2: Oberer Teil der Verlegeschale
- 3: Unterer Teil der Verlegeschale
- 4: Rippen
- 5: Muffen
- 6: Einfassung
- 7: Aufweitung
- 8: Fixierbereich
- 9: Markierungslinie
- 10: Kabelbinder
- 12: Gummiband
- 13: Sicherungsbogen
- 14: Rohrschelle
- 20: erstes Kabel / Kabelende
- 21: zweites Kabel / Kabelende
- 23: erstes Rohr / Rohrende
- 24: zweites Rohr / Rohrende

## Patentansprüche

1. Verlegeschale für Kabelverbundstränge, insbesondere für Lichtwellenleitkabelverbundstränge (1), bestehend aus zwei Halbschalenbauteilen, wobei ein Halbschalenbereich endseitig eine Einfassung für das Kabel oder Rohr aufweist und wenigstens ein Halbschalenbauteil (2, 3) der Verlegeschale Rippen (4) aufweist, **dadurch gekennzeichnet, dass**
in Vertiefungen des unteren Halbschalenbauteils (2, 3) der Verlegeschale Öffnungen zum Wiederabführen von eventuell auftretender Feuchtigkeit vorliegen und im Bereich der Einfassung eine Zugentlastung für das Kabel oder Rohr vorgesehen ist, welche stoff- und kraftschlüssig unter Verwendung eines elastischen und kompressiblen Bandes und einer kompressionsstabilen Halbschalenkombination mit wenigstens einem Halbschalenbauteil der Verlegeschale verbunden ist.

2. Verlegeschale für Kabelverbundstränge, insbesondere für Lichtwellenleitkabelverbundstränge (1) nach Anspruch 1, **dadurch gekennzeichnet, dass**
ein Halbschalenbauteil (2, 3) der Verlegeschale ein Vielzahl von Rippen (4), insbesondere 12 Rippen (4), aufweist.

3. Verlegeschale für Kabelverbundstränge, insbesondere für Lichtwellenleitkabelverbundstränge (1), nach Anspruch 1 bis 2, **dadurch gekennzeichnet, dass**
wenigstens ein Halbschalenbauteil (2, 3) der Verlegeschale zur Abdeckung und Schutz für die sich im Innenraum befindlichen Anschlüsse eingerichtet ist.

4. Verlegeschale für Kabelverbundstränge, insbesondere für Lichtwellenleitkabelverbundstränge (1), nach Anspruch 1 bis 3, **dadurch gekennzeichnet, dass**
wenigstens ein Halbschalenbauteil (2, 3) der Verlegeschale über die gesamte Länge verteilt Vertiefungen als Halterungs- und Befestigungshilfen für die Verschlussbinder der Verlegeschale aufweist.

5. Verlegeschale für Kabelverbundstränge, insbesondere für Lichtwellenleitkabelverbundstränge (1), nach einem der Ansprüche 1 bis 4, **dadurch gekennzeichnet, dass**
die Zugentlastung mehrteilig aufgebaut ist und die Bauteile aus einer Gruppe ausgewählt werden, welche Kabelbinder, Gummistreifen, insbesondere selbstklebende Gummistreifen, Sicherungsbogen, Rohrschellen, Rohrhalbschalen, Verbindungsmittel, Kleber, Klebeband, Dichtmasse, Kombinationen hiervon und dergleichen umfasst.

6. Verlegeschale für Kabelverbundstränge, insbesondere für Lichtwellenleitkabelverbundstränge (1), nach einem der Ansprüche 1 bis 5, **dadurch gekennzeichnet, dass**
die Zugentlastung formschlüssig mit wenigstens einem Halbschalenbauteil der Verlegeschale verbunden ist.

7. Verlegeschale für Kabelverbundstränge, insbesondere für Lichtwellenleitkabelverbundstränge (1), nach einem der Ansprüche 1 bis 6, **dadurch gekennzelchnet, dass**
wenigstens ein Halbschalenbauteil endseitig eine Aufweitung zur wenigstens teilweisen Aufnahme und/oder Abdeckung der Zugentlastung aufweist.

8. Verfahren zur Montage einer Verlegeschale gemäß einem der vorstehenden Ansprüche mit den Schritten:
- Anbringen eines elastischen, selbstklebenden Gummistreifes am Außenmantel eines Kabels oder Rohrs;
- Anordnen eines Sicherungsbogens im Bereich des Gummistreifens;
- Einlegen des Kabels oder Rohrs in ein Halbschalenbauteil der Verlegeschale;
- Fixierung des Kabels oder Rohrs mit der Einfassung des Halbschalenbauteils.

9. Verfahren zur Montage einer Verlegeschale gemäß Anspruch 8, **dadurch gekennzeichnet, dass**
das Verfahren an beiden Enden eines Halbschafenbauteils der Verlegeschale durchgeführt wird.

10. Verfahren zur Montage einer Verlegeschale gemäß Anspruch 8 oder 9, **dadurch gekennzeichnet, dass**
nach Fixierung des Rohrs oder Kabels am einen Halbschalenbauteil die Verlegeschale durch Anordnen des zweiten Halbschalenbauteils verschlossen wird.

11. Verfahren zur Montage einer Verlegeschale gemäß einem der Ansprüche 8 bis 10, **dadurch gekennzeichnet, dass**
das zweite Halbschalenbauteil endseitig Aufweitungen aufweist, welche wenigstens teilweise die Zugentlastung aufnimmt.

12. Verfahren zur Montage einer Verlegeschale gemäß einem der Ansprüche 8 bis 11. **dadurch gekennzeichnet, dass**
die beiden Halbschalenbauteile mittels einem Verbindungselement, wie zum Beispiel einem Kabelbinder, fixiert werden.

13. Verwendung einer Verlegeschale gemäß einem der Ansprüche 1 bis 7 zur Aufnahme von Rohren, insbesondere Erdrohren, Rohrverbunden, Glasfaserrohrverbunden, Kabel, Kabelverbundstränge, insbesondere für Lichtwellenleitkabelverbundstränge, Kombinationen hiervon und dergleichen.

## Claims

1. An installation tray for cable composite strands, in particular for fibre optic composite strands (1), made up of two half-tray components, wherein one half-tray area has a surround at the end for the cable or the pipe and at least one half-tray component (2, 3) of the installation tray has ribs (4), **characterised in that**
there are openings in depressions in the lower half-tray component (2, 3) of the installation tray for diverting potentially occurring moisture away and, in the surround area, strain relief is provided for the cable or pipe, which is connected in a material or force-locking manner with at least one half-tray component of the installation tray using an elastic and compressible tape and a compression resistant half-tray combination.

2. The installation tray for cable composite strands, in particular for fibre optic composite strands (1), according to claim 1, **characterised in that**
a half-tray component (2, 3) of the installation tray has a multiplicity of ribs (4), in particular 12 ribs (4).

3. The installation tray for cable composite strands, in particular for fibre optic composite strands (1), according to claim 1 to 2, **characterised in that**
at least one half-tray component (2, 3) of the installation tray is adapted to cover and protect the connections located inside it.

4. The installation tray for cable composite strands, in particular for fibre optic composite strands (1), according to claim 1 to 3, **characterised in that**
at least one half-tray component (2, 3) of the installation tray has depressions distributed over its whole length as holding and fixing aids for the installation tray closure ties.

5. The installation tray for cable composite strands, in particular for fibre optic composite strands (1), according to claim 1 to 4, **characterised in that**
the strain relief consists of several parts and the parts are selected from a group comprising cable ties, rubber strips, in particular self-adhesive rubber strips, securing bow, pipe clamps, pipe half shells, connecting means, adhesives, adhesive tape, sealants, combinations thereof and the like.

6. The installation tray for cable composite strands, in particular for fibre optic composite strands (1), according to claim 1 to 5, **characterised in that**
the strain relief is connected in a positively locking manner to at least one half-tray component of the installation tray.

7. The installation tray for cable composite strands, in particular for fibre optic composite strands (1), according to claim 1 to 6, **characterised in that**
at least one half-tray component has a widening at the end for at least partially receiving and/or covering the strain relief.

8. A process for assembling an installation tray according to one of the preceding claims, with the following steps:
- affixing an elastic, self-adhesive rubber strip to the outer casing of a cable or pipe;
- arranging a securing bow in the rubber strip area;
- inserting the cable or pipe into a half-tray component of the installation tray;
- fixing the cable or pipe using the surround of the half-tray component.

9. The process for assembling an installation tray according to claim 8, **characterised in that**
the process is carried out at both ends of a half-tray component of the installation tray.

10. The process for assembling an installation tray according to claim 8 or 9, **characterised in that**
following the fixation of the pipe or cable to a half-tray component, the installation tray is closed by putting the second half-tray component in place.

11. The process for assembling an installation tray according to one of claims 8 to 10, **characterised in that**
the second half-tray component has widenings at the ends which, at least partially, receive the strain relief.

12. The process for assembling an installation tray according to one of claims 8 to 11, **characterised in that**
both half-tray components are fixed by means of a connecting element such as, for example, a cable tie.

13. A use of an installation tray according to one of claims 1 to 7, for the accommodation of pipes, in particular ground pipes, pipe bundles, glass fibre bundles, cables, cable composite strands, in particular for fibre optic composite strands, combinations thereof and the like.

## Revendications

1. Enveloppe de pose pour brins de câbles liés, en particulier brins de câbles liés de fibres optiques (1) composée de deux composants à demi-enveloppe, une zone à demi-enveloppe comportant en extrémité une bordure pour le câble ou le tube et au moins un composant à demi-enveloppe (2, 3) de l'enveloppe de pose comportant des nervures (4), **caractérisée en ce que**
dans les cavités du composant à demi-enveloppe (2, 3) inférieur de l'enveloppe de pose des ouvertures sont présentes pour la réévacuation de l'humidité se produisant éventuellement et dans la zone de la bordure est prévu un système d'allégement de la traction pour le câble ou le tube, lequel est relié par conformité de matière ou de force en utilisant une bande élastique et compressible et une combinaison à demi-enveloppe stable à la compression avec au moins un composant à demi-enveloppe de l'enveloppe de pose.

2. Enveloppe de pose pour brins de câbles liés, en particulier brins de câbles liés de fibres optiques (1) selon la revendication 1, **caractérisée en ce qu'** un composant à demi-enveloppe (2, 3) de l'enveloppe de pose comporte une pluralité de nervures (4), en particulier 12 nervures (4).

3. Enveloppe de pose pour brins de câbles liés, en particulier brins de câbles liés de fibres optiques (1) selon la revendication 1 à 2, **caractérisée en ce qu'**
au moins un composant à demi-enveloppe (2, 3) de l'enveloppe de pose est agencé pour couvrir et protéger les connexions se trouvant dans l'espace intérieur.

4. Enveloppe de pose pour brins de câbles liés, en particulier brins de câbles liés de fibres optiques (1) selon la revendication 1 à 3, **caractérisée en ce qu'**
au moins un composant à demi-enveloppe (2, 3) de l'enveloppe de pose comporte réparties sur toute la longueur des cavités en tant qu'assistances de maintien et de fixation pour les attaches de fermeture de l'enveloppe de pose.

5. Enveloppe de pose pour brins de câbles liés, en particulier brins de câbles liés de fibres optiques (1) selon l'une quelconque des revendications 1 à 4, **caractérisée en ce que**
le système d'allégement de la traction est conçu en plusieurs parties et les composants sont choisis à partir d'un groupe, lequel comprend des attaches-câbles, des bandes de caoutchouc, en particulier des bandes de caoutchouc autocollantes, des cintres de fixation, des colliers pour tube, des demi-colliers pour tube, des moyens de liaison, des adhésifs, une bande adhésive, une masse d'étanchéité, des combinaisons de ceux-ci et d'éléments analogues.

6. Enveloppe de pose pour brins de câbles liés, en particulier brins de câbles liés de fibres optiques (1) selon l'une quelconque des revendications 1 à 5, **caractérisée en ce que**
le système d'allégement de la traction est relié par conformité de forme à au moins un composant à demi-enveloppe de l'enveloppe de pose.

7. Enveloppe de pose pour brins de câbles liés, en particulier brins de câbles liés de fibres optiques (1) selon l'une quelconque des revendications 1 à 6, **caractérisée en ce qu'**
au moins un composant à demi-enveloppe comporte en extrémité un élargissement pour recevoir au moins en partie et/ou couvrir le système d'allégement de la traction.

8. Procédé pour le montage d'une enveloppe de pose selon l'une quelconque des revendications précédentes avec les étapes :
- mise en place d'une bande de caoutchouc élastique, autocollante sur l'enveloppe extérieure d'un câble ou d'un tube,
- positionnement d'un cintre de fixation dans la zone de la bande de caoutchouc,
- pose du câble ou du tube dans un composant à demi-enveloppe de l'enveloppe de pose,
- fixation du câble ou du tube avec la bordure du composant à demi-enveloppe.

9. Procédé de montage d'une enveloppe de pose selon la revendication 8, **caractérisé en ce que**
le procédé est exécuté aux deux extrémités d'un composant à demi-enveloppe de l'enveloppe de pose.

10. Procédé de montage d'une enveloppe de pose selon la revendication 8 ou 9, **caractérisé en ce qu'**
après la fixation du tube ou du câble sur le composant à demi-enveloppe, l'enveloppe de pose est fermée par le positionnement du deuxième composant à demi-enveloppe.

11. Procédé de montage d'une enveloppe de pose selon l'une quelconque des revendications 8 à 10, **caractérisé en ce que**
le deuxième composant à demi-enveloppe comporte en extrémité des élargissements, lesquels reçoivent au moins en partie le système d'allégement de la traction.

12. Procédé de montage d'une enveloppe de pose selon l'une quelconque des revendications 8 à 11, **caractérisé en ce que**
les deux composants à demi-enveloppe sont fixés au moyen d'un élément de liaison, comme par exemple un attache-câble.

13. Utilisation d'une enveloppe de pose selon l'une quelconque des revendications 1 à 7 pour loger des tubes, notamment des tubes de mise à la terre, des joints de tube, des joints de tube en fibres de verre, des câbles, des brins de câble liés, en particulier pour des brins de câbles liés de fibres optiques, des combinaisons de ceux-ci et d'éléments analogues.
